# EUROPEAN PATENT SPECIFICATION

(11) **EP 1 775 208 B1**
(45) Date of publication and mention of the grant of the patent: **17.10.2012**
(21) Application number: 06255311.0
(22) Date of filing: 16.10.2006
(51) Int. Cl.: B62K 11/04, B62K 11/06

(54) **Straddle-type vehicle**
Grätschsitz-Fahrzeug
Véhicule du type monté à califourchon

(30) Priority: 17.10.2005 JP 2005302287
(43) Date of publication of application: 18.04.2007
(73) Proprietor: Yamaha Hatsudoki Kabushiki Kaisha, Iwata-shi, Shizuoka 438-8501 (JP)
(72) Inventor: Shinsho, Masami c/o Yamaha Hatsudoki K.K., Iwata-shi Shizuoka-ken 438-8501 (JP); Nakaaki, Hajime c/o Yamaha Hatsudoki K.K., Iwata-shi Shizuoka-ken 438-8501 (JP)
(74) Representative: Zimmermann, Tankred Klaus

(56) References cited:
- EP-A- 1 698 548
- US-A- 4 852 678
- US-A- 5 375 677
- US-A1- 2004 238 254

## Description

### BACKGROUND

The present invention relates to a straddle-type (or saddle-ride type) vehicle such as motorcycle, etc.

Conventionally, a straddle-type vehicle such as motorcycle, etc. is known to comprise a main pipe, or main tube, of a frame, which constitutes a skeleton of a vehicle body and comprises a front pipe, or front tube, extending longitudinally with a rear end side thereof bent downward and a rear pipe, or rear tube, extending straight downwardly from a rear end side of the front pipe (see, for example, JP-B-3-31621).

With such motorcycle according to the related art, an engine is supported on a main pipe by connecting a front end side of the engine to a front end side of the front pipe and connecting a rear end side of the engine to a lower end side of the rear pipe. Thereby, the engine together with the main pipe is used as a rigid member of the vehicle body to simplify the main pipe in structure.

However, the related art involves a problem that since a rear end side of the front pipe, which constitutes the main pipe, is structured to be bent downward substantially in the form of a dogleg, a load from the engine is locally centered on the bent portion positioned on the rear end side of the front pipe, when the engine is mounted to the main pipe, to make it difficult to increase the stiffness of the main pipe.

Also, the rear pipe of the main pipe is structured to extend substantially straight downwardly from the rear end side (lower end side) of the front pipe, so that, for example, when a rearwardly directed load from the engine is applied on the rear pipe, the load acts as a large moment on the rear pipe extending straight and the load cannot be transmitted smoothly to the whole main pipe whereby it is difficult to heighten the main pipe in stiffness.

US 5,375,677 discloses a hollow body frame for a motorcycle wherein the engine is used as a reinforcing member for the body frame. The pre-characterizing portion of Claim 1 is intended to read on this prior art document.

US 2004/0238254 discloses an engine-supporting structure for a motorcycle in which a collar is interposed between an engine and an engine-supporting frame portion of a vehicle body frame.

US 4,852,678 relates to a vehicle body frame for a motorcycle for mounting a front fork, an engine and a rear fork.

### SUMMARY

It is an object of the invention to mitigate the above mentioned problems and to provide a straddle-type vehicle in which the stiffness of the main pipe can be increased, or heightened and an engine can be stably supported by the main pipe.

This object is achieved by a straddle-type vehicle according to claim 1.

According to the present invention, there is provided a straddle-type vehicle comprising a main pipe including a front portion extending forward and downward and a rear portion extending rearward and downward, a swing arm connected to and supported on the rear portion of the main pipe through a pivot shaft so as to be able to swing, and an engine mounted to at least the front portion and the rear portion of the main pipe, wherein the rear portion of the main pipe comprises a curved portion having an arcuate front surface which is concavely curved in front of the pivot shaft and a crankcase of the engine is connected to the curved portion of the rear portion of the main pipe, characterized in that the curved portion has an arcuate rear surface which is convexly curved to go around the rear of the pivot shaft; fixation of the crankcase to the rear portion of the main pipe comprises an upper fixing portion and a lower fixing portion; and the arcuate front portion of the curved portion of the rear portion of the main pipe is positioned in front of a straight line, which connects between the center of swinging of the pivot shaft and the upper fixing portion, and a straight line, which connects between the center of swinging of the pivot shaft and the lower fixing portion.

In an embodiment of the invention constructed in this manner, since the main pipe is curved, when the rear portion side of the main pipe is connected to the crankcase of the engine, a load from the engine is not locally centered on the main pipe as described above in the related art but a load from the engine can be uniformly applied to the whole main pipe and the main pipe can be enhanced in stiffness. Also, since the main pipe is connected to the crankcase of the engine in a manner to go around the pivot shaft forwardly downward from rearwardly thereof, as compared with the case where the rear pipe is extended straight to be directed substantially vertically downward from the rear end side of the front pipe to be connected to the crankcase as in the related art, a load transmitted to the main pipe rearward from the engine can be surely born whereby the main pipe can be enhanced in stiffness. Further, since the main pipe can be arranged in a manner to cover the engine, the engine compartmented by the main pipe can also be enhanced in feeling of volume.

Also, in an embodiment of the invention, a fuel tank is further provided rearwardly of the engine and the fuel tank can overlap the curved portion of the rear portion side of the main pipe at least partially as viewed in side view. With such construction, the curved portion of the rear portion side of the main pipe can cover a side of the fuel tank to protect the fuel tank from shock or the like from outside.

Also, in an embodiment of the invention, the main pipe comprises a pair of left and right main pipes and an interval between the left main pipe and the right main pipe is larger on a lower side thereof than on an upper side thereof. With such construction, the left and right main pipes are formed at a small interval on an upper side thereof whereby it is possible to improve a driver's traveling comfort. Also, the left and right main pipes are formed at a large interval on a lower side thereof whereby it is possible to keep a fairly large space, in which the fuel tank is arranged, on a lower side to ensure a volume for the fuel tank.

Further, in an embodiment of the invention, a fuel pump that supplies a fuel to the engine is further provided and the fuel pump can be arranged on a front portion side of the fuel tank. With such construction, a load of a vehicle body shared on a front wheel can be set large by the fuel tank, so that it is possible to enhance traveling in stability. Also, while a bottom of the fuel tank is formed to be inclined forwardly downward taking account of interference in the case where the swing arm swings upward, the fuel pump is arranged on the front portion side of the fuel tank, so that the fuel pump can draw all the fuel from a lowermost bottom of the fuel tank thoroughly.

Further, in an embodiment of the invention, the crankcase of the engine comprises two vertically divided portions, that is, an upper casing and a lower casing and the upper casing and the lower casing can be fixed to the rear portion side of the main pipe. With such construction, both the upper casing and the lower casing of the crankcase can be fixed to the rear portion side of the main pipe and the crankcase can be stably fixed to the main pipe.

In accordance with the invention, fixation of the crankcase to the rear portion side of the main pipe comprises an upper fixing portion and a lower fixing portion. In an embodiment of the invention, a center of swinging of the pivot shaft is positioned on an extension of a mating plane of the upper casing and the lower casing, and the upper fixing portion and the lower fixing portion can be positioned up and down with the mating plane of the upper casing and the lower casing as a reference. With such construction, the center of swinging of the pivot shaft projects laterally of a vehicle body but the fixation of the crankcase to the rear portion side of the main pipe can be formed not to keep out thereof to project laterally of a vehicle body, so that it is possible to improve a driver's traveling comfort or the like.

Also, in an embodiment of the invention, the engine comprises a V-type engine having a front cylinder and a rear cylinder, engine brackets are mounted to the main pipe to extend between the front cylinder and the rear cylinder of the V-type engine, and the front cylinder and the rear cylinder, respectively, can be fixed to the engine brackets. With such construction, the front and the rear cylinders of the V-type engine can be suspended from and mounted to the main pipe through the engine bracket, so that it is possible to stably support the V-type engine on the main pipe.

Further, in an embodiment of the invention, there is further provided a rear exhaust pipe extending rearward and downward from the rear cylinder, the rear cylinder and the rear portion side of the main pipe separate from each other, and the rear exhaust pipe can be exposed to a space defined between the rear cylinder and the rear portion side of the main pipe. With such construction, it is possible to cut off conduction of high temperature heat to the fuel tank from the rear exhaust pipe through the main pipe, thus enabling enhancing the fuel tank in durability, service life, etc.

In accordance with the invention, the arcuate front surface of the curved portion of the rear portion side of the main pipe can be positioned in front of a straight line, which connects between the center of swinging of the pivot shaft and the upper fixing portion, and a straight line, which connects between the center of swinging of the pivot shaft and the lower fixing portion. With such construction, it is possible to enhance the curved portion of the rear portion side of the main pipe in stiffness and to further stably support the engine by means of the curved portion of the main pipe.

With the straddle-type vehicle according to the invention, the rear portion side of the main pipe is structured to be connected to the crankcase of the engine in a state of being curved to go around the pivot shaft forwardly downward from the rear side thereof, so that it is possible to enhance the main pipe in stiffness to stably support the engine by means of the main pipe, thus enabling improving the straddle-ride type vehicle in performance, reliability, etc.

### BRIEF DESCRIPTION OF THE DRAWINGS

An example embodiment of the invention is described in the following with reference to the accompany drawings in which
Fig. 1 is a side view showing a motorcycle according to an embodiment of the invention.
Fig. 2 is a view showing, in enlarged scale, essential parts of a main pipe, an engine, etc. in Fig. 1.
Fig. 3 is a front view showing, in enlarged scale, the main pipes and a fuel tank in a direction indicated by arrows III-III in Fig. 1.
Fig. 4 is a view showing, in enlarged scale, essential parts of the main pipe, a pivot shaft, etc. in Fig. 3.

### DETAILED DESCRIPTION

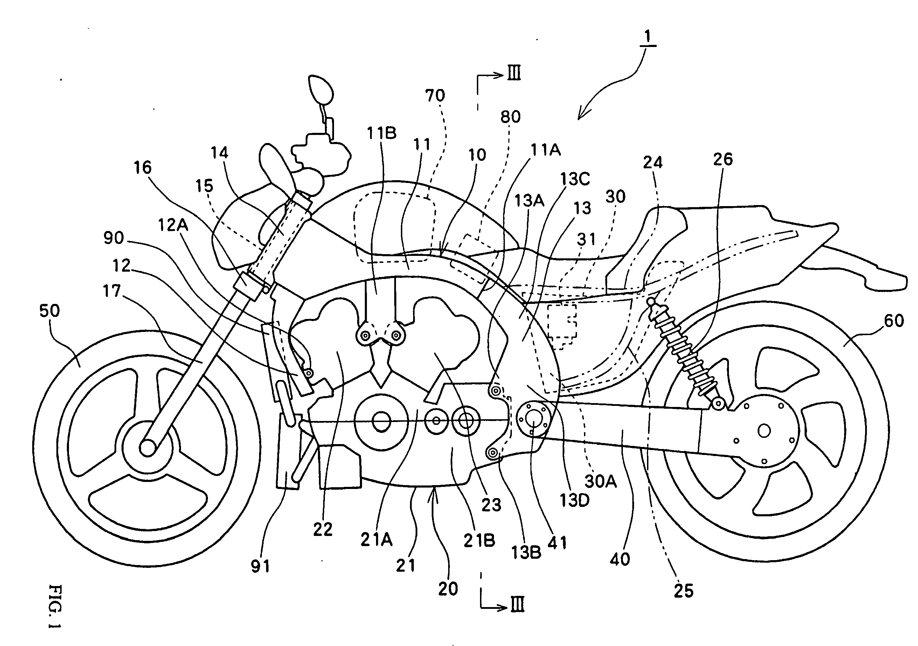

An application of a straddle-type (or straddle-ride) type vehicle according to an embodiment of the invention, to a motorcycle is taken as an example, is described with reference to Figs. 1 to 4. A motorcycle 1 according to the embodiment of the invention comprises left and right main pipes 10, 10 and an engine 20 as shown in Figs. 1 to 3.

The main pipes (or tubes) 10 comprise an intermediate pipe 11 extending above the engine 20 in a longitudinal direction and substantially in a horizontal direction, a front pipe 12 welded at an upper end side thereof to a front end side of the intermediate pipe 11 and constituting a front side extending forwardly downwardly of the engine 20 from the front end side, and a rear pipe 13 welded at an upper end side thereof to a rear end side 11A of the intermediate pipe 11 and constituting a rear side extending rearwardly downwardly of the engine 20 from the rear end side. In addition, the front end of the intermediate pipe 11 is positioned forwardly of engine brackets 13A, 13B of the rear pipe 13 described later.

Also, an engine bracket 12A projects from (is protrusively provided on) a lower end side of the front pipe 12 and a front cylinder 22 described later is fixed to the engine bracket 12A. Also, an engine bracket 11B is provided on a longitudinally intermediate portion of the intermediate pipe 11. The engine bracket 11B is suspended from and extends between the front cylinder 22 and a rear cylinder 23 of the engine 20, which are described later, from the intermediate pipe 11, and a lower end thereof separates in a bifurcated manner. The front cylinder 22 and the rear cylinder 23 of the engine 20, respectively, are fixed to a lower end side of the engine bracket 11B.

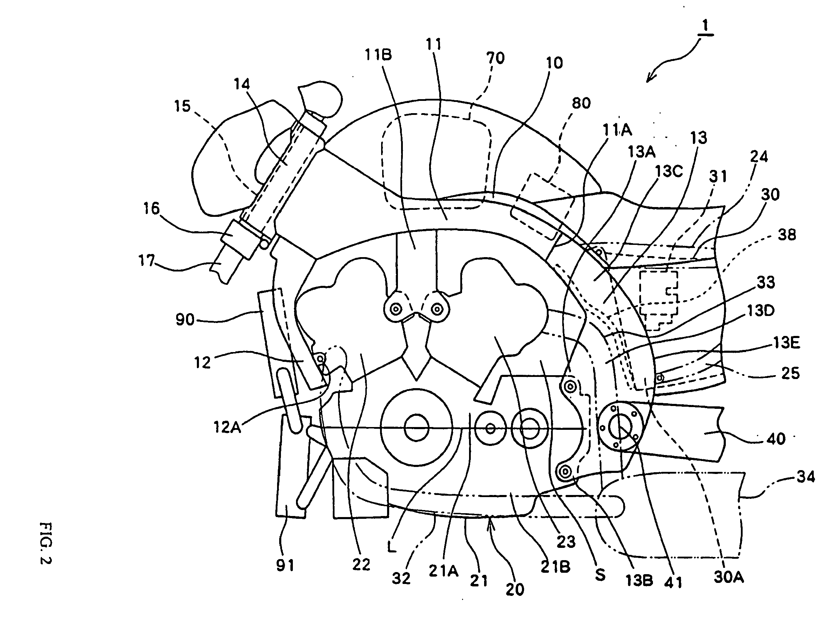

Here, the rear pipe 13 positioned on a rear side of the main pipe 10 is formed as a curved portion 13E to go around a pivot shaft 41, described later, forwardly downward from a rear side thereof to extend downward in an arcuate manner as shown in Figs. 1 and 2. The upper engine bracket 13A as an upper fixing portion and the lower engine bracket 13B as a lower fixing portion project from (are protrusively provided on) the curved portion 13E of the rear pipe 13 to vertically separate from each other, and an upper casing 21 A and a lower casing 21 B of the engine 20, which are described later, respectively, are fixed (connected) to the upper engine bracket 13A and the lower engine bracket 13B. Also, a center of swinging of the pivot shaft 41 is positioned on an extension of a mating plane L of the upper casing 21 A and the lower casing 21B as shown in Fig. 2 and the upper engine bracket 13A and the lower engine bracket 13B are positioned up and down with the mating plane L as a reference. Also, the curved portion 13E of the rear pipe 13 is arranged in a manner to overlap a front portion 30A of a fuel tank 30 positioned rearwardly of the engine 20 as viewed in side view. Further, an upper portion 13C of the rear pipe 13 is formed to be small in width as viewed in side view and a lower portion is formed to be large in width as viewed in side view.

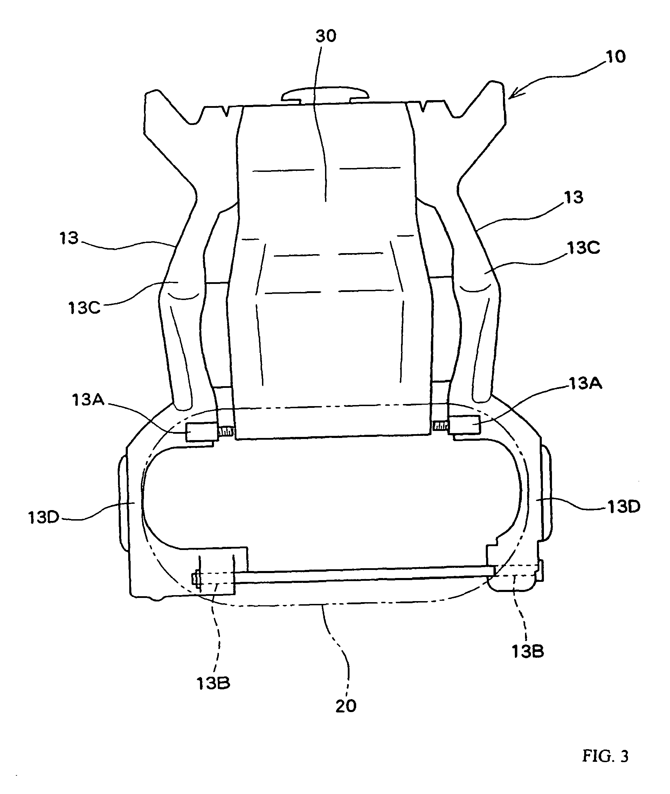

Also, an interval between the rear pipes 13, 13 (see Fig. 3) positioned on lower sides of the left main pipe 10 and the right main pipe 10 is set to be wide, an interval between the intermediate pipes 11, 11 (only one of them being shown in Fig. 2) positioned on upper sides thereof is set to be small, the fuel tank 30 is arranged between the upper portions 13C, 13C of the rear pipes 13, 13, and the engine 20 indicated by two-dot chain lines in Fig. 3 is arranged between lower portions 13D, 13D.

Further, a front end side of a swing arm 40 is connected to and supported on the lower portion 13D of the rear pipe 13 through the pivot shaft 41 to be able to swing. Also, a rear end side of the swing arm 40 is connected to a rotating shaft of a rear wheel 60 to be rotatable.

Further, a seat rail 24 is bolted to the main pipe 10 to extend rearwardly of the upper portion 13C of the rear pipe 13. A back stay 25 is bolted to the lower portion 13D of the rear pipe 13 to extend curvilinearly rearward and obliquely upward and an upper end side of the back stay 25 is bolted to an intermediate portion of the seat rail 24. Also, a shock absorber 26 is provided between the upper end side of the back stay 25 and the rear end side of the swing arm 40.

Also, a head pipe 14 is welded to a front end of the intermediate pipe 11, which constitutes the main pipe 10, and a rotating shaft 15 provided on a handle is inserted rotatably into the head pipe 14. Also, the rotating shaft 15 of the handle is fixed to a longitudinally intermediate portion of an under-bracket 16 extending in a left and right direction and upper end sides of left and right front forks 17 (only one of them being shown in the Figure) are inserted into and fixed to both left and right end sides of the under-bracket 16. A front wheel 50 is connected rotatably to lower end sides of the front forks 17.

The engine 20 is constructed as a so-called V-type 4 cylinder engine. The engine 20 comprises a crankcase 21 divided vertically into two halves, that is, the upper casing 21 A and the lower casing 21B, the left and right front cylinders 22 (only one of them being shown in the figure) extending upward and obliquely forward from an upper front side of the upper casing 21A, and the left and right rear cylinders 23 positioned on a rear side of the front cylinders 22 to extend upward and obliquely rearward from an upper portion of the lower casing 21 B. The engine 20 is suspended from and mounted to the main pipe 10 through the engine brackets 11B, 12A, 13A, 13B, etc.

In addition, a fuel pump 31 is arranged on a front side of the fuel tank 30 to be positioned in the vicinity of the upper portions 13C of the main pipes 10 to supply a fuel to the engine 20. Also, an air cleaner 70 is arranged above the intermediate pipes 11, which constitute the main pipes 10, and a battery 80 is arranged above the intermediate pipes 11 to be positioned between the air cleaner 70 and the fuel tank 30. Also, an upper radiator 90 and a lower radiator 91 are arranged between the engine 20 and the front wheel 50. The upper radiator 90 is fixed to, for example, the front pipes 11 of the main pipes 10 and the lower radiator 91 is fixed to the crankcase 21 of the engine 20.

Also, front exhaust pipes 32 are connected to the front cylinders 22 of the engine 20 and rear exhaust pipe 33 are connected to the rear cylinders 23 of the engine 20. The rear exhaust pipes 33 extend rearwardly and downwardly of the rear cylinders 23 and their lower end sides are connected to a muffler 34 together with the front exhaust pipes 32. The rear cylinders 23 and the rear pipes 13 are arranged away from each other and the rear exhaust pipes 33 are exposed to a space S defined between the rear cylinders 23 and the rear pipes 13.

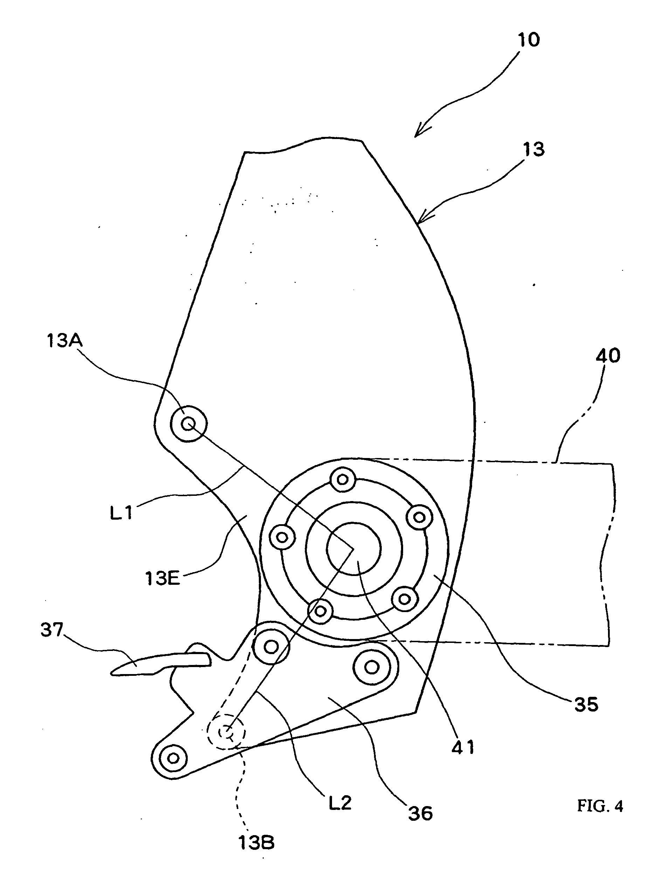

Also, as shown in Fig. 4, the curved portion 13E of the main pipe 10 is formed to project forwardly of a straight line L1, which connects between the center of swinging of the pivot shaft 41 and the engine bracket 13A being an upper fixing portion, and a straight line L2, which connects between the center of swinging of the pivot shaft 41 and the engine bracket 13B being a lower fixing portion.

Further, a heel guard 35 is mounted to the curved portion 13E of the main pipe 10 to be positioned around the pivot shaft 41. The heel guard 35 serves to prevent a driver from directly striking against the rear pipe 13 when putting a foot on a foot rest 37 described later. A foot bracket 36 separate from the heel guard 35 is mounted to the curved portion 13E below and away from the heel guard 35, and the foot rest 37, on which a driver puts a foot, is provided at a front end side of the foot bracket 36. Also, as shown in Fig. 2, arranged between the fuel tank 30 and the rear exhaust pipes 33 is a thermal insulation plate 38 to cut off conduction of high temperature heat to the fuel tank 30, etc. from the rear exhaust pipes 33.

With the motorcycle 1, according to the embodiment, constructed in this manner, the rear pipe 13 positioned on a rear side of the main pipe 10 is formed to be arcuately curved. Therefore, when the rear pipe 13 of the main pipe 10 is connected to the crankcase 21 of the engine 20, a load from the engine is not locally centered on the bent portion of the main pipe as described above in the related art but a load from the engine 20 can be uniformly applied to the whole main pipes 10 and the main pipes can be enhanced in stiffness.

Also, the rear pipe 13 positioned on the rear side of the main pipe 10 is formed as the curved portion 13E to go around the pivot shaft 41 forwardly downward from the rear side thereof and the crankcase 21 of the engine 20 is connected to the curved portion 13E. Therefore, as compared with the case where the rear pipe is extended straight to be directed substantially vertically downward from the rear end side of the front pipe to be connected to the crankcase of the engine as in the related art, a load transmitted to the main pipes 10 rearward from the engine 20 can be surely born by the rear pipes 13 whereby the main pipes 10 can be enhanced in stiffness and the motorcycle 1 can be improved in performance, reliability, etc.

Also, since the curved portions 13E, which constitute the rear pipes 13 of the main pipes 10, are arranged in a manner to overlap the front portion 30A of the fuel tank 30 as viewed in side view, the main pipes 10 can protect the fuel tank 30 from shocks or the like from outside to enhance the fuel tank 30 in durability, service life, etc.

Also, an interval between the left and right intermediate pipes 11 positioned on upper sides of the left and right main pipes 10 is formed to be small in width, so that it is possible to improve a traveling comfort. Also, an interval between the left and right rear pipes 13 positioned on lower sides of the left and right main pipes 10 is formed to be large in width, so that it is possible to keep a fairly large space, in which the fuel tank 30 is arranged, between the left and right rear pipes 13 to ensure a volume for the fuel tank 30.

Further, since the heel guard 35 and the foot bracket 36 are provided on the main pipe 10 to be independent (separate) from each other, the foot rest 37 mounted to the foot bracket 36 can be arranged close to a center of a vehicle to make a driver easily put a foot on the foot rest 37 as compared with the case where the heel guard 35 and the foot bracket 36 are made integral with each other.

In addition, the embodiment has been described taking the motorcycle 1 as an example of a straddle-ride type vehicle, the invention is not limited thereto but may be applied to other straddle-ride type vehicle such as three-wheeler, buggy, etc.

In order to increase the stiffness of a main pipe to enable the main pipe stably to support an engine, a main pipe or main tube has been described that comprises an intermediate pipe, or intermediate tube, extending above an engine in a longitudinal direction and substantially in a horizontal direction, a front pipe, or front tube, extending forwardly downwardly of the engine from a front end side of the intermediate pipe, and a rear pipe, or rear tube, extending rearwardly downwardly of the engine from a rear end side of the intermediate pipe. The rear pipe can be curved arcuately in a manner to go around a pivot shaft forwardly downward from a rear side thereof and the engine can be connected to a lower end side of the rear pipe.

### DESCRIPTION OF REFERENCE NUMERALS AND SIGNS

1: motorcycle (straddle-type vehicle),
10: main pipe (or main tube) - left main pipe, right main pipe,
11: intermediate pipe (or intermediate tube),
11B, 12A: engine bracket,
13A: engine bracket (upper fixing portion),
13B: lower engine bracket (lower fixing portion),
12: front pipe (or front tube) - front side,
13: rear pipe (or rear tube) - rear side,
20: engine,
21: crankcase,
21A: upper casing,
21B: lower casing,
22: front cylinder,
23: rear cylinder,
30: fuel tank,
31: fuel pump,
40: swing arm,
41: pivot shaft,
L: mating plane

## Claims

1. A straddle-type vehicle (1) comprising a main pipe (10) including a front portion (12) extending forward and downward and a rear portion (13) extending rearward and downward,
a swing arm (40) connected to and supported on the rear portion of the main pipe through a pivot shaft (41) so as to be able to swing, and
an engine (20) mounted to at least the front portion and the rear portion of the main pipe,
wherein the rear portion of the main pipe comprises a curved portion (13E) having an arcuate front surface which is concavely curved in front of the pivot shaft (41) and a crankcase (21) of the engine is connected to the curved portion of the rear portion of the main pipe,
**characterized in that**
the curved portion (13E) has an arcuate rear surface which is convexly curved to go around the rear of the pivot shaft (41);
fixation of the crankcase (21) to the curved portion (13E) of the rear portion (13) of the main pipe comprises an upper fixing portion (13A) and a lower fixing portion (13B); and
the arcuate front surface of the curved portion (13E) of the rear portion (13) of the main pipe is positioned in front of a straight line (L1), which connects between the center of swinging of the pivot shaft (41) and the upper fixing portion (13A), and a straight line (L2), which connects between the center of swinging of the pivot shaft and the lower fixing portion (13B).

2. The straddle-type vehicle according to claim 1, further comprising a fuel tank (30) arranged rearwardly of the engine (20) and wherein the fuel tank overlaps the curved portion (13E) of the rear portion of the main pipe at least partially as viewed in side view.

3. The straddle-type vehicle according to claim 2, further comprising a fuel pump (31) that is arranged to supply a fuel to the engine (20) and wherein the fuel pump is arranged on a front portion (30A) of the fuel tank (30).

4. The straddle-type vehicle according to any preceding claim, wherein the main pipe (10) comprises a pair of left and right main pipes and a space between the left main pipe and the right main pipe is larger on a lower side thereof than on an upper side thereof.

5. The straddle-type vehicle according to any preceding claim, wherein the crankcase (21) of the engine (20) comprises two vertically divided portions, that is, an upper casing (21A) and a lower casing (21 B) and the upper casing and the lower casing are fixed to the curved portion (13E) of the rear portion (13) of the main pipe.

6. The straddle-type vehicle according to claim 5, wherein a center of swinging of the pivot shaft (41) is positioned on an extension of a mating plane (L) of the upper casing (21 A) and the lower casing (21 B), and the upper fixing portion and the lower fixing portion are positioned up and down with the mating plane of the upper casing and the lower casing as a reference.

7. The straddle-type vehicle according to any preceding claim, wherein the engine (20) comprises a V-type engine having a front cylinder (22) and a rear cylinder (23), engine brackets (11B) are mounted to the main pipe (10) to extend between the front cylinder and the rear cylinder of the V-type engine, and the front cylinder and the rear cylinder, respectively, are fixed to the engine brackets.

8. The straddle-type vehicle according to claim 7, further comprising a rear exhaust pipe (33) extending rearward and downward from the rear cylinder (23), the rear cylinder and the rear portion (13) of the main pipe being separate from each other, and the rear exhaust pipe is exposed to a space defined between the rear cylinder and the rear portion of the main pipe.

## Patentansprüche

1. Ein Grätsch-Typ-Fahrzeug (1), das eine Hauptleitung (10) aufweist, die einen Frontabschnitt (12) umfasst, der sich vorwärts und abwärts erstreckt, und einen Rückabschnitt (13), der sich rückwärts und abwärts erstreckt,
einen Schwingarm (40), der mit dem Rückabschnitt der Hauptleitung durch eine Drehwelle (41) verbunden und auf demselben getragen ist, um in der Lage zu sein, zu schwingen, und
einen Motor (20), der an zumindest entweder dem Frontabschnitt oder dem Rückabschnitt der Hauptleitung befestigt ist,
wobei der Rückabschnitt der Hauptleitung einen gekrümmten Abschnitt (13E) aufweist, mit einer bogenförmigen Frontoberfläche, die konkav vor der Schwenkwelle (41) gekrümmt ist, und wobei eine Kurbelwelle (21) des Motors mit dem gekrümmten Abschnitt des Rückabschnitts der Hauptleitung verbunden ist,
**dadurch gekennzeichnet, dass**
der gekrümmte Abschnitt (13E) eine bogenförmige Rückoberfläche aufweist, die konvex gekrümmt ist, um um die Rückseite der Schwenkwelle (41) zu gehen;
die Befestigung der Kurbelwelle (21) an dem gekrümmten Abschnitt (13E) des Rückabschnitts (13) der Hauptleitung einen oberen Befestigungsabschnitt (13A) und einen unteren Befestigungsabschnitt (13B) aufweist; und
die bogenförmige Frontoberfläche des gekrümmten Abschnitts (13E) des Rückabschnitts (13) der Hauptleitung vor einer geraden Linie (L1) positioniert ist, die eine Verbindung zwischen der Mitte des Schwingens der Schwenkwelle (41) und dem oberen Befestigungsabschnitt (13A) herstellt, und einer geraden Linie (L2), die eine Verbindung zwischen der Mitte des Schwingens der Schwenkwelle und dem unteren Befestigungsabschnitt (13B) herstellt.

2. Das Grätsch-Typ-Fahrzeug gemäß Anspruch 1, das ferner einen Kraftstofftank (30) aufweist, der hinter dem Motor (20) angeordnet ist und wobei der Kraftstofftank den gekrümmten Abschnitt (13E) des Rückabschnitts der Hauptleitung zumindest teilweise betrachtet in der Seitenansicht überlappt.

3. Das Grätsch-Typ-Fahrzeug gemäß Anspruch 2, das ferner eine Kraftstoffpumpe (31) aufweist, die angeordnet ist, um einen Kraftstoff zu dem Motor (20) zu liefern, und wobei die Kraftstoffpumpe an einem Frontabschnitt (30A) des Kraftstofftanks (30) angeordnet ist.

4. Das Grätsch-Typ-Fahrzeug gemäß einem der vorangehenden Ansprüche, bei dem die Hauptleitung (10) ein Paar einer linken und rechten Hauptleitung aufweist und ein Raum zwischen der linken Hauptleitung und der rechten Hauptleitung auf einer unteren Seite derselben größer ist als auf einer oberen Seite derselben.

5. Das Grätsch-Typ-Fahrzeug gemäß einem der vorangehenden Ansprüche, bei dem die Kurbelwelle (21) des Motors (20) zwei vertikal geteilte Abschnitte aufweist, d.h. ein oberes Gehäuse (21A) und ein unteres Gehäuse (21B), und das obere Gehäuse und das untere Gehäuse an dem gekrümmten Abschnitt (13E) des Rückabschnitts (13) der Hauptleitung befestigt sind.

6. Das Grätsch-Typ-Fahrzeug gemäß Anspruch 5, bei dem eine Mitte des Schwingens der Schwenkwelle (41) auf einer Erweiterung einer zusammenpassenden Ebene (L) des oberen Gehäuses (21 A) und des unteren Gehäuses (21 B) positioniert ist, und der obere Befestigungsabschnitt und der untere Befestigungsabschnitt auf und ab positioniert sind mit der zusammenpassenden Ebene des oberen Gehäuses und des unteren Gehäuses als Referenz.

7. Das Grätsch-Typ-Fahrzeug gemäß einem der vorangehenden Ansprüche, bei dem der Motor (20) einen V-Type-Motor mit einem Frontzylinder (22) und einem Rückzylinder (23) aufweist, Motorhalterungen (11B) an der Hauptleitung (10) befestigt sind, um sich zwischen dem Frontzylinder und dem Rückzylinder des V-Typ-Motors zu erstrecken, und der Frontzylinder bzw. der Rückzylinder jeweils an den Motorhalterungen befestigt sind.

8. Das Grätsch-Typ-Fahrzeug gemäß Anspruch 7, das ferner ein hinteres Auspuffrohr (33) aufweist, das sich rückwärts und abwärts von dem Rückzylinder (23) erstreckt, wobei der Rückzylinder und der Rückabschnitt (13) der Hauptleitung getrennt voneinander sind und das hintere Auspuffrohr hin zu einem Raum freiliegend ist, der zwischen dem Rückzylinder und dem Rückabschnitt der Hauptleitung definiert ist.

## Revendications

1. Véhicule du type à selle (1) comprenant un tuyau principal (10) comportant une partie avant (12) s'étendant vers l'avant et vers le bas et une partie arrière (13) s'étendant vers l'arrière et vers le bas,
un bras pivotant (40) connecté à et supporté sur la partie arrière du tuyau principal par l'intermédiaire d'un arbre de pivotement (41) de manière à pouvoir pivoter, et
un moteur (20) monté sur au moins la partie avant et la partie arrière du tuyau principal,
dans lequel la partie arrière du tuyau principal comprend une partie courbée (13E) présentant une surface avant arquée qui est courbée de manière concave face à l'arbre de pivotement (41) et un vilebrequin (21) du moteur est connecté à la partie courbée de la partie arrière du tuyau principal,
**caractérisé par le fait que**
la partie courbée (13E) présente une surface arrière arquée qui est courbée de manière convexe pour s'étendre autour de l'arrière de l'arbre de pivotement (41);
la fixation du vilebrequin (21) à la partie courbée (13E) de la partie arrière (13) du tuyau principal comprend une partie de fixation supérieure (13A) et une partie de fixation inférieure (13B), et
la surface avant arquée de la partie courbée (13E) de la partie arrière (13) du tuyau principal est positionnée devant une ligne droite (L1) qui est connectée entre le centre de pivotement de l'arbre de pivotement (41) et la partie de fixation supérieure (13A), et une ligne droite (L2) qui et connectée entre le centre de pivotement de l'arbre de pivotement et la partie de fixation inférieure (13B).

2. Véhicule du type à selle selon la revendication 1, comprenant par ailleurs un réservoir à carburant (30) disposé vers l'arrière du moteur (20) et dans lequel le réservoir à carburant vient au moins partiellement en recouvrement avec la partie courbée (13E) de la partie arrière du tuyau principal, vu en vue latérale.

3. Véhicule de type à selle selon la revendication 2, comprenant par ailleurs une pompe à carburant (31) qui est disposée de manière à alimenter un carburant vers le moteur (20) et dans lequel la pompe à carburant est disposée sur une partie avant (30A) du réservoir à carburant (30).

4. Véhicule de type à selle selon l'une ou l'autre revendication précédente, dans lequel le tuyau principal (10) comprend une paire de tuyaux principaux gauche et droit et un espace entre le tuyau principal gauche et le tuyau principal droit est plus grand de leur côté inférieur que de leur côté supérieur.

5. Véhicule de type à selle selon l'une ou l'autre revendication précédente, dans lequel le vilebrequin (21) du moteur (20) comprend deux parties divisées verticalement, c'est-à-dire un boîtier supérieur (21A) et un boîtier inférieur (21B) et le boîtier supérieur et le boîtier inférieur sont fixés à la partie courbée (13E) de la partie arrière (13) du tuyau principal.

6. Véhicule de type à selle selon la revendication 5, dans lequel un centre de pivotement de l'arbre de pivotement (41) est positionné sur une prolongation d'un plan de coïncidence (L) du boîtier supérieur (21A) et du boîtier inférieur (21B), et la partie de fixation supérieure et la partie de fixation inférieure sont positionnées en haut et en bas avec le plan de coïncidence du boîtier supérieur et du boîtier inférieure comme référence.

7. Véhicule de type à selle selon l'une ou l'autre revendication précédente, dans lequel le moteur (20) comprend un moteur de type en V présentant une cylindre avant (22) et un cylindre arrière (23), les bras-supports du moteur (11B) sont montés sur le tuyau principal (10) de manière a s'étendre entre le cylindre avant et le cylindre arrière du moteur de type en V, et le cylindre avant et le cylindre arrière respectivement sont fixés aux bras-supports du moteur.

8. Véhicule de type à selle selon la revendication 7, comprenant par ailleurs un tuyau d'échappement arrière (33) s'étendant vers l'arrière et vers le bas depuis le cylindre arrière (23), le cylindre arrière et la partie arrière (13) du tuyau principal étant séparés l'un de l'autre, et le tuyau d'échappement arrière est exposé à un espace défini entre le cylindre arrière et la partie arrière du tuyau principal.
